# EUROPEAN PATENT APPLICATION

(11) **EP 2 620 624 A1**
(43) Date of publication of application: **31.07.2013**
(21) Application number: 11838076.5
(22) Date of filing: 02.11.2011
(51) Int. Cl.: F02D 29/00, E02F 9/20, F01N 3/023, F02D 29/04, F02D 29/06, B01D 46/42

(54) **WORK MACHINE**

(30) Priority: 02.11.2010 JP 2010246578
(71) Applicant: Hitachi Construction Machinery Co., Ltd., Bunkyo-ku Tokyo 112-0004 (JP)
(72) Inventor: NAKAYAMA, Akira, Tsuchiura-shi Ibaraki 300-0013 (JP)
(74) Representative: Jansen, Cornelis Marinus
(86) International application number: PCT/JP2011/075343
(87) International publication number: WO 2012/060426

(57) **Abstract**

In a work machine, as a regeneration need determining unit determines that a collecting unit needs to be regenerated, a load control unit causes an increase in load on an engine by controlling a pressure accumulating unit so as to accumulate pressure oil attributable to an output of the engine in the pressure accumulating unit as pressure energy from the hydraulic pump; and once the pressure energy is accumulated to a level matching a pressure accumulation upper limit at the pressure accumulating unit, the load control unit causes the increase in the load on the engine by controlling a power storage unit so as to store electric energy of power generated at a generator attributable to the output of the engine in the power storage unit.

## Description

### TECHNICAL FIELD

The present invention relates to a work machine equipped with an exhaust gas purifier used to decontaminate exhaust gas.

### BACKGROUND ART

There are exhaust gas purifiers known in the related art that decontaminate exhaust gas by trapping (collecting) particulate matter contained in the exhaust gas via a filter. At a work machine equipped with such an exhaust gas purifier, the engine output is increased so as to raise the exhaust gas temperature to a level required for filter regeneration once the pressure difference between a pressure manifesting at a point frontward relative to a filter used to trap the particulate matter and a pressure manifesting at a point rearward relative to the filter reaches a predetermined value. The work machine is configured so that the engine output, having been increased to raise the exhaust gas temperature, is accumulated at an accumulator as hydraulic energy in the pressure oil.

### CITATION LIST

### PATENT LITERATURE

Patent Literature 1: Japanese Laid Open Patent Publication No. 2009-46998

### SUMMARY OF INVENTION

### TECHNICAL PROBLEM

However, the work machine disclosed in the patent literature cited above is yet to address a concern that the engine output, having been increased for purposes of raising the exhaust gas temperature, may not be fully accumulated at the accumulator as pressure energy while filter regeneration is in progress. In such a case, the engine output accumulation at the accumulator may need to be terminated while the filter regeneration is underway. In order to allow the filter regeneration to continue, the temperature of the exhaust gas must be raised by injecting fuel into the cylinder through auxiliary injection commonly referred to as post-injection executed with timing retarded relative to the timing of the primary fuel injection. However, the fuel injected through the post-injection is not utilized as energy for work performed by the work machine. This means that whenever fuel is injected through post-injection, fuel efficiency compromised.

### SOLUTION TO PROBLEM

According to the 1st aspect of the present invention, a work machine comprises: a hydraulic pump that is driven by an engine and puts out pressure oil; a generator driven by the engine; a collecting unit that is disposed in a discharge path through which exhaust gas from the engine passes and collects a collecting target contained in the exhaust gas; a regeneration need determining unit that determines whether or not the collecting unit needs to be regenerated; a regeneration completion determining unit that determines whether or not regeneration of the collecting unit has been completed; a load control unit that causes an increase in a load on the engine if the regeneration need determining unit determines that the collecting unit needs to be regenerated and stops the increase in the load on the engine once the regeneration completion determining unit determines that regeneration of the collecting unit has been completed; a pressure accumulating unit that accumulates pressure oil put out from the hydraulic pump as pressure energy, the pressure oil being attributable to output of the engine; and a power storage unit that stores electric energy of power generated at the generator, the electric energy of power being attributable to the output of the engine, wherein: as the regeneration need determining unit determines that the collecting unit needs to be regenerated, the load control unit causes the increase in the load on the engine by controlling the pressure accumulating unit so as to accumulate the pressure oil attributable to the output of the engine in the pressure accumulating unit as pressure energy from the hydraulic pump; and once the pressure energy is accumulated to a level matching a pressure accumulation upper limit at the pressure accumulating unit, the load control unit causes the increase in the load on the engine by controlling the power storage unit so as to store the electric energy of power generated at the generator attributable to the output of the engine in the power storage unit.
According to the 2nd aspect of the present invention, the work machine according to the 1st aspect may further comprise: a regeneration instruction input unit that accepts an instruction for regenerating the collecting unit input by an operator, and it is preferred that once the instruction for regenerating the collecting unit input at the regeneration instruction input unit is accepted, the regeneration need determining unit determines that the collecting unit needs to be regenerated.
According to the 3rd aspect of the present invention, the work machine according to the 1st aspect may further comprise: a cumulative operating time determining unit that determines whether or not a cumulative operating time over which the work machine has been engaged in operation following completion of regeneration of the collecting unit has become equal to a predetermined length of time, and it is preferred that once the cumulative operating time determining unit determines that the cumulative operating time has become equal to the predetermined length of time, the regeneration need determining unit determines that the collecting unit needs to be regenerated.
According to the 4th aspect of the present invention, the work machine according to the 1st aspect may further comprise: an exhaust gas passage resistance detection unit that detects an exhaust gas pressure difference between pressure of the exhaust gas manifesting at a point forward of the collecting unit and pressure of exhaust gas manifesting at a point rearward of the collecting unit in the discharge path, and it is preferred that if the exhaust gas pressure difference detected by the exhaust gas passage resistance detection unit is equal to or greater than a predetermined pressure difference, the regeneration need determining unit determines that the collecting unit needs to be regenerated.
According to the 5th aspect of the present invention, the work machine according to any one of the 1st through 3rd aspects may further comprise: an exhaust gas passage resistance detection unit that detects an exhaust gas pressure difference between pressure of the exhaust gas manifesting at a point forward of the collecting unit and pressure of exhaust gas manifesting at a point rearward of the collecting unit in the discharge path, and it is preferred that if the exhaust gas pressure difference, detected by the exhaust gas passage resistance detection unit after the regeneration need determining unit determines that the collecting unit needs to be regenerated, is equal to or less than a predetermined pressure difference set as a decision-making criterion for deciding whether or not regeneration of the collecting unit has been completed, the regeneration completion determining unit determines that regeneration of the collecting unit has been completed.
According to the 6th aspect of the present invention, it is preferred that in the work machine according to the 4th aspect if the exhaust gas pressure difference, detected by the exhaust gas passage resistance detection unit after the regeneration need determining unit determines that the collecting unit needs to be regenerated, is equal to or less than a predetermined pressure difference set as a decision-making criterion for deciding whether or not regeneration of the collecting unit has been completed, the regeneration completion determining unit determines that regeneration of the collecting unit has been completed.
According to the 7th aspect of the present invention, the work machine according to any one of the 1st through 4th aspects may further comprise: an engine load increase time determining unit that determines whether or not the increase in load on the engine has been sustained by the load control unit over a length of time equal to or greater than a predetermined length of time, and it is preferred that once the engine load increase time determining unit determines that the increase in load on the engine by the load control unit has been sustained over a length of time equal to or greater than the predetermined length of time, the regeneration completion determining unit determines that regeneration of the collecting unit has been completed.
According to the 8th aspect of the present invention, the work machine according to any one of the 1sr through 3rd aspects may further comprise: an exhaust gas passage resistance detection unit that detects an exhaust gas pressure difference between pressure of the exhaust gas manifesting at a point forward of the collecting unit and pressure of exhaust gas manifesting at a point rearward of the collecting unit in the discharge path, and; an engine load increase time determining unit that determines whether or not the increase in load on the engine by the load control unit has been sustained over a length of time equal to or greater than a predetermined length of time, and it is preferred that if the exhaust gas pressure difference, detected by the exhaust gas passage resistance detection unit after the regeneration need determining unit determines that the collecting unit needs to be regenerated, is equal to or less than a predetermined pressure difference set as a decision-making criterion for deciding whether or not regeneration of the collecting unit has been completed and the engine load increase time determining unit determines that the increase in load on the engine has been sustained by the load control unit over the length of time equal to or greater than the predetermined length of time, the regeneration completion determining unit determines that regeneration of the collecting unit has been completed.
According to the 9th aspect of the present invention, the work machine according to the 4th aspect may further comprise: an engine load increase time determining unit that determines whether or not the increase in load on the engine by the load control unit has been sustained over a length of time equal to or greater than a predetermined length of time, and it is preferred that if the exhaust gas pressure difference, detected by the exhaust gas passage resistance detection unit after the regeneration need determining unit determines that the collecting unit needs to be regenerated, is equal to or less than a predetermined pressure difference set as a decision-making criterion for deciding whether or not regeneration of the collecting unit has been completed and the engine load increase time determining unit determines that the increase in the load on the engine has been sustained by the load control unit over a length of time equal to or greater than the predetermined length of time, the regeneration completion determining unit determines that regeneration of the collecting unit has been completed.
According to the 10th aspect of the present invention, the work machine according to any one of the 1st through 9th aspects may further comprise: a pressure detection unit that detects a pressure at the pressure accumulating unit, and it is preferred that during a period of time elapsing after the regeneration need determining unit determines that the collecting unit needs to be regenerated and ending when the regeneration completion determining unit determines that regeneration of the collecting unit has been completed, (1) if the pressure at the pressure accumulating unit detected by the pressure detection unit is equal to or less than an upper limit value, the load control unit causes the increase in the load on the engine by controlling the pressure accumulating unit so as to accumulate the pressure oil from the hydraulic pump attributable to the output of the engine at the pressure accumulating unit as pressure energy and (2) if the pressure at the pressure accumulating unit detected by the pressure detection unit exceeds the upper limit value, the load control unit causes the increase in the load on the engine by controlling the power storage unit so as to store the electric energy of power generated at the generator attributable to the output of the engine, in the power storage unit.
According to the 11th aspect of the present invention, the work machine according to the 10th aspect may further comprise: a voltage detection unit that detects a voltage at the power storage unit; and a post-injection unit that executes post-injection of fuel at the engine, and it is preferred that the load control unit controls the power storage unit so as to (1) cause the increase in the load on the engine by storing the electric energy of power generated at the generator attributable to the output of the engine in the power storage unit if the voltage at the power storage unit detected by the voltage detection unit is equal to or less than an upper limit voltage and (2) stop power storage in the power storage unit if the voltage at the power storage unit detected by the voltage detection unit exceeds the voltage upper limit; and during a period of time elapsing after the regeneration need determining unit determines that the collecting unit needs to be regenerated and ending when the regeneration completion determining unit determines that regeneration of the collecting unit has been completed, the post-injection unit executes post-injection of fuel at the engine if the load control unit stops power storage in the power storage unit because the voltage at the power storage unit detected by the voltage detection unit exceeds the voltage upper limit.
According to the 12th aspect of the present invention, a work machine comprises: a hydraulic pump that is driven by an engine and puts out pressure oil; a generator driven by the engine; a pressure accumulating unit that accumulates pressure oil from the hydraulic pump as pressure energy, the pressure oil being attributable to output of the engine; a power storage unit that stores electric energy of power generated at the generator, the electric energy of power being attributable to the output of the engine; a hydraulic actuator that is driven with pressure energy of oil that is accumulated at the pressure accumulating unit; an electric motor that is driven with electric energy stored in the power storage unit; and a drive control unit that controls drive of the hydraulic actuator with the pressure energy of oil that is accumulated at the pressure accumulating unit and also controls drive of the electric motor with electric energy stored in the power storage unit, wherein: the drive control unit gives priority to drive of the hydraulic actuator over drive of the electric motor.
According to the 13th aspect of the present invention, the work machine according to the 12th aspect may further comprise: a pressure detection unit that detects pressure at the pressure accumulating unit, and it is preferred that the drive control unit controls drive of the hydraulic actuator and drive of the electric motor so that (1) if the pressure at the pressure accumulating unit detected by the pressure detection unit is equal to or greater than a lower limit value, the drive control unit drives the hydraulic actuator with the pressure energy of oil that is accumulated at the accumulating unit without driving the electric motor and (2) if the pressure at the pressure accumulating unit detected by the pressure detection unit is less than the lower limit value, the drive control unit drives the electric motor with the electric energy stored in the power storage unit without driving the hydraulic actuator.

### ADVANTAGEOUS EFFECT OF THE INVENTION

According to the present invention, the extent to which the fuel efficiency is compromised due to collecting unit regeneration can be minimized.

### BRIEF DESCRIPTION OF THE DRAWINGS

(FIG. 1) An external view of a hydraulic excavator representing an example of a work machine
(FIG. 2) A hydraulic circuit pertaining to the hydraulic excavator 100 achieved in a first embodiment
(FIG. 3) A flowchart providing operational details of the regeneration processing executed to regenerate the DPF 3 in the first embodiment.
(FIG. 4) A hydraulic circuit pertaining to the hydraulic excavator 100 achieved in a second embodiment
(FIG. 5) A flowchart providing operational details of the regeneration processing executed to regenerate the DPF 3 in the second embodiment
(FIG. 6) A hydraulic circuit pertaining to the hydraulic excavator 100 achieved in a third embodiment
(FIG. 7) A flowchart providing operational details of the regeneration processing executed to regenerate the DPF 3 in the third embodiment
(FIG. 8) A flowchart pertaining to a variation
(FIG. 9) A block diagram in reference to which the functions of the control circuit 23 achieved in the first embodiment will be described
(FIG. 10) A block diagram in reference to which the functions of the control circuit 23 achieved in the second embodiment will be described
(FIG. 11) A block diagram in reference to which the functions of the control circuit 23 achieved in the third embodiment will be described

### DESCRIPTION OF EMBODIMENTS

### - First Embodiment -

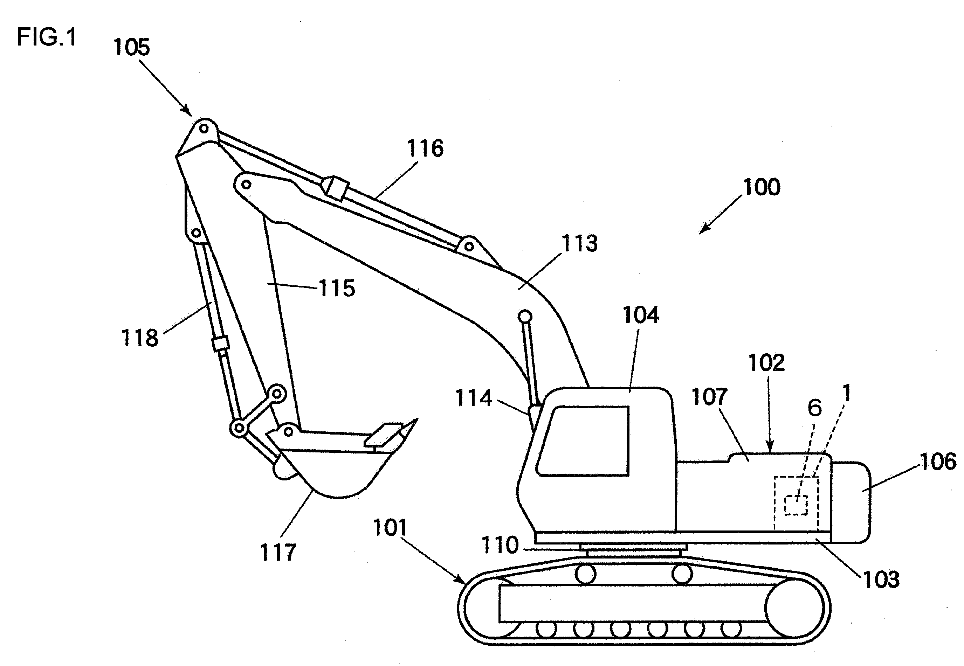

In reference to FIGS. 1 through 3, the first embodiment of the work machine according to the present invention will be described. FIG. 1 presents an external view of a hydraulic excavator representing an example of the work machine according to the present invention. The hydraulic excavator 100 includes a crawler type traveling lower superstructure 101 and a revolving upper superstructure 102 which is rotatably mounted on the traveling lower superstructure 101 via a swivel 110. A revolving frame 103 formed as a structural block, an operator's cab 104 disposed on the left side to the front of the revolving frame 103, a front work arm 105 disposed at the center to the front of the revolving frame 103 and a counterweight 106, disposed to the rear of the revolving frame 103 in order to provide a counterweight to the front work arm 105, are all located at the revolving upper superstructure 102.

A housing cover 107, which defines an engine room, is disposed on the revolving frame 103 at a position between the operator's cab 104 and the counterweight 106. In the engine room, an engine 1, a hydraulic pump (main pump) 6 driven by the engine 1, and the like are installed.

The front work arm 105 includes a boom 113 attached to the revolving upper superstructure 102 in such a manner that it can be caused to swing up/down freely via a boom cylinder 114, an arm 115 which is linked to the boom 113 and is installed so that it can be caused to swing up/down freely via an arm cylinder 116, and a work attachment (bucket) 117 which is linked to the front end of the arm 115 and is mounted so that it can be caused to swing up/down freely via a bucket cylinder 118.

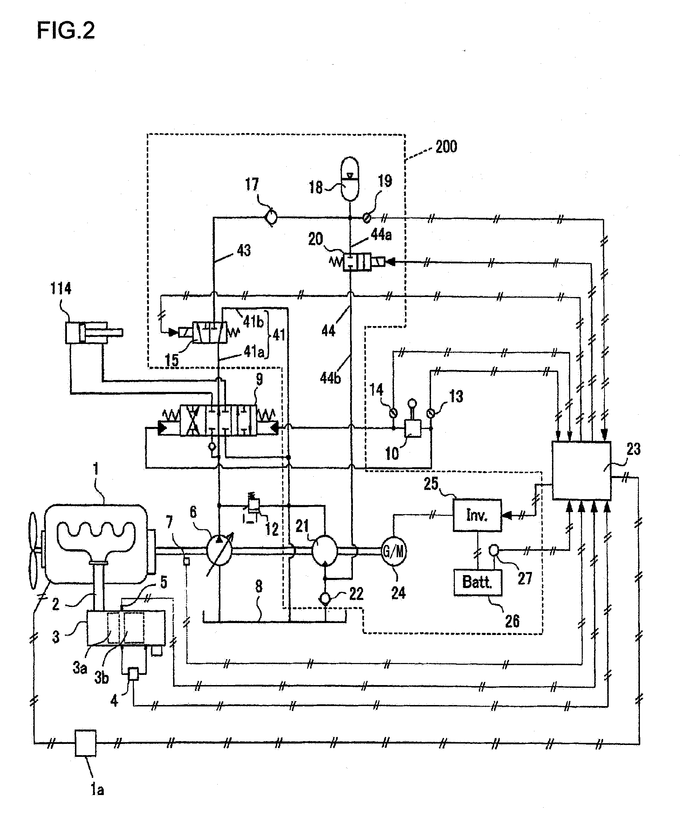

FIG. 2 shows the hydraulic circuit in the hydraulic excavator 100. It is to be noted that FIG. 2 does not include illustrations of the cylinders 116 and 118, i.e., the cylinders other than the boom cylinder 114, or illustrations of the control valves and the operation levers for these cylinders 116 and 118. The main pump 6, a control valve 9, a main relief valve 12, a hydraulic operating fluid tank 8 and a motive power absorbing device 200 are disposed in the hydraulic circuit. In addition, a pilot pump (not shown) via which the control valve 9 is controlled, an operation lever 10, a control circuit 23 that controls the motive power absorbing device 200, are also disposed in the hydraulic circuit.

An exhaust pipe 2 and a diesel particulate filter (hereafter referred to as a DPF) 3 are connected in series relative to the engine 1 that drives the main pump 6. The DPF 3 is an exhaust gas purifier that traps particulate matter (PM) which is contained in exhaust gas from the engine 1 and needs to be removed. The DPF 3 is equipped with a self regeneration function that allows it to remove the PM trapped therein by burning the PM as the temperature of the exhaust gas rises. The DPF 3 is configured with an oxidation catalyst 3a and a filter unit 3b. An exhaust pressure sensor 4 that detects the difference between the pressure manifesting at a point to the front of the filter unit 3b and the pressure manifesting at a point to the rear of the filter unit 3b, and an exhaust temperature sensor 5 that detects the temperature of the exhaust gas flowing into the filter unit 3b are disposed at the DPF 3. An engine rotation rate sensor 7 detects the rotation speed (rotation rate) of the engine 1.

The main pump 6 is a variable-capacity pump via which pressure oil is supplied to various actuators in the hydraulic excavator 100. As it is driven by the engine 1, it delivers the hydraulic operating fluid in the hydraulic operating fluid tank 8 to the boom cylinder 114 via the control valve 9. The pressure oil supplied via the main pump 6 is also delivered to the arm cylinder 116, the bucket cylinder 118 and the like via the corresponding control valves (not shown). The maximum pressure for this hydraulic circuit is defined via the main relief valve 12. The control valve 9 is a hydraulic pilot-type control valve used to control the flow of pressure oil into the bottom chamber or the rod chamber of the boom cylinder 114. The position of the spool of the control valve 9 is controlled by the pressure of the pilot pressure oil, which corresponds to the extent to which the operation lever 10 is operated. The pressure of the pilot pressure oil supplied to the control valve 9, which is controlled via the operation lever 10, is detected by pressure sensors 13 and 14.

A pressure accumulation valve 15, an accumulator 18, a pressure sensor 19, an assist valve 20, a hydraulic motor 21, a generator/motor 24, an inverter/converter 25, a battery 26 and a battery voltage sensor 27 are disposed in the motive power absorbing device 200. The pressure accumulation valve 15 is a switching valve disposed in an oil passage 41. It is to be noted that the hydraulic operating fluid having been put out by the main pump 6 and passed through the control valve 9 flows back into the hydraulic operating fluid tank 8 through the oil passage 41. The part of the oil passage 41 located on the upstream side relative to the pressure accumulation valve 15 (the oil passage connecting the control valve 9 with the pressure accumulation valve 15) is an oil passage 41a, whereas the part of the oil passage 41 located on the downstream side relative to the pressure accumulation valve 15 (the oil passage connecting the pressure accumulation valve 15 with the hydraulic operating fluid tank) is an oil passage 41b. The pressure accumulation valve 15, which is engaged in operation in response to a control signal provided from a control circuit 23, controls the flow of pressure oil from the main pump 6, i.e., determines whether the pressure oil from the main pump 6 is to be supplied to the accumulator 18 or be directed back into the hydraulic operating fluid tank 8. In other words, under the control achieved via the pressure accumulation valve 15 as per the instruction carried in the control signal provided from the control circuit 23, the oil passage 41a is connected to either an oil passage 43, to which the accumulator 18 is connected, as will be described later, or to the oil passage 41b.

The accumulator 18, which is a pressure accumulating means for accumulating pressure oil from the main pump 6, is connected to the pressure accumulation valve 15 via the oil passage 43. A check valve 17 is disposed in the oil passage 43 so as to prevent a reverse flow of pressure oil having been accumulated at the accumulator 18. The pressure of the pressure oil accumulated at the accumulator 18 is detected by the pressure sensor 19.

The assist valve 20 is a switching valve disposed in an oil passage 44, which connects the accumulator 18 with the hydraulic motor 21 to be described in detail later. The assist valve 20, engaged in operation as per an instruction carried in a control signal provided from the control circuit 23, is switched to either allow the pressure oil accumulated at the accumulator 18 to be supplied to the hydraulic motor 21 or disallow such a flow of pressure oil to the hydraulic motor 21. The part of the oil passage 44 located on the upstream side relative to the assist valve 20 (the oil passage connecting the assist valve 20 with the accumulator 18) is an oil passage 44a, whereas the part of the oil passage 44 located on the downstream side relative to the pressure assist valve 20 (the oil passage connecting the pressure assist valve 20 with the hydraulic motor 21) is an oil passage 44b.

An output shaft of the hydraulic motor 21, which is a fixed-capacity hydraulic motor, is directly connected to an input shaft of the main pump 6. It is to be noted that, however, that the present invention may be adopted in conjunction with a variable-capacity hydraulic motor 21 instead. As will be described later, the hydraulic motor 21 is driven with the pressure oil accumulated at the accumulator 18. Reference numeral 22 indicates a makeup valve, via which the hydraulic operating fluid in the hydraulic operating fluid tank 8 is delivered to the hydraulic motor 21 while the assist valve 20 is in a closed state.

The generator/motor 24 is capable of functioning as an AC generator and is also capable of functioning as an AC motor. A rotating shaft of the generator/motor 24, which constitutes an output shaft as well as an input shaft, is directly connected to the input shaft of the main pump 6. The generator/motor 24 is connected to the inverter/converter 25.

The inverter/converter 25 converts AC power generated at the generator/motor 24 to DC power achieving a predetermined voltage and supplies the DC power resulting from the conversion to the battery 26. In addition, the inverter/converter 25 converts DC power stored in the battery 26 to AC power achieving a predetermined voltage and a predetermined frequency and supplies the AC power resulting from the conversion to the generator/motor 24. The inverter/converter 25 is controlled by the control circuit 23. The battery 26 is a secondary battery, such as a lead storage battery or a lithium ion battery, used to store DC power. However, it may be constituted with, for instance, an electric double-layer capacitor, instead. The battery voltage sensor 27 detects a voltage at the battery 26.

The control circuit 23 is a control device that controls the pressure accumulation valve 15, the assist valve 20, the inverter/converter 25 and the like. The pressure sensors 13, 14 and 19, the exhaust pressure sensor 4, the exhaust temperature sensor 5, the engine rotation rate sensor 7 and the battery voltage sensor 27 are connected to the control circuit 23. In addition, the control circuit 23 is connected with an engine control circuit 1a that controls the engine 1 and is thus able to exchange information pertaining to the engine 1. Control of the pressure accumulation valve 15, the assist valve 20 and the inverter/converter 25 achieved via the control circuit 23 will be described in detail later.

Furthermore, the control circuit 23 includes functional blocks, i.e., a regeneration need determining unit 23a, a regeneration completion determining unit 23b and a load control unit 23c. Based upon a fore/aft pressure difference ΔPf representing the difference between the pressure manifesting at a point to the front of the DPF 3 and the pressure manifesting at a point to the rear of the DPF 3, detected via the exhaust pressure sensor 4, the regeneration need determining unit 23a determines whether or not the DPF 3 needs to be regenerated. In addition, based upon the fore/aft pressure difference ΔPf pertaining to the DPF 3 detected by the exhaust pressure sensor 4, the regeneration completion determining unit 23b determines whether or not regeneration of the DPF 3 has been completed. Once the regeneration need determining unit 23a determines that the DPF 3 needs to be regenerated, the load control unit 23c executes various types of control so as to increase the load on the engine 1. In addition, as the regeneration completion determining unit 23b determines that regeneration of the DPF 3 has been completed while the load on the engine 1 is increased, the load control unit 23c stops the increase in the load on the engine 1. It is to be noted that the regeneration need determining unit 23a, the regeneration completion determining unit 23b and the load control unit 23c will be described in detail later.

As a specific operation lever among the various operation levers at the hydraulic excavator 100 structured as described above is operated, the spool of the control valve for the particular hydraulic cylinder corresponding to the operation lever is driven and the hydraulic cylinder is driven at a speed corresponding to the extent to which the operation lever has been operated. For instance, as the operation lever 10 is operated, the spool of the control valve 9 for the boom cylinder 114 is driven with the pilot pressure oil from the pilot pump (not shown) achieving a pressure corresponding to the extent to which the operation lever 10 has been operated. As a result, the boom cylinder 114 is driven with a speed corresponding to the extent to which the operation lever 10 has been operated.

As pressure oil is delivered into the bottom-side oil chamber of the boom cylinder 114, the boom 113 is driven so as to swing upward relative to the revolving upper superstructure 102, whereas as pressure oil is delivered into the rod-side oil chamber 14b of the boom cylinder 114, the boom 113 is driven so as to swing downward relative to the revolving upper superstructure 102. In addition, as pressure oil is delivered into a bottom-side oil chamber (not shown) of the arm cylinder 116, the arm 115 is driven so as to swing downward relative to the boom 113, whereas as pressure oil is delivered into a rod-side oil chamber (not shown) of the arm cylinder 116, the arm 115 is driven so as to swing upward relative to the boom 113.

As pressure oil is delivered into a bottom-side oil chamber of the bucket cylinder 118, the bucket 117 is driven so as to swing downward relative to the arm 115, whereas as pressure oil is delivered into a rod-side oil chamber of the bucket cylinder 118, the bucket 117 is driven so as to swing upward relative to the arm 115.

### - Regeneration processing executed to regenerate the DPF 3 and salvage of motive power via the motive power absorbing device 200 -

When the regeneration processing for the DPF 3, which is to be described later, is not underway, the pressure accumulation valve 15 at the motive power absorbing device 200 sets the oil passage 41a and the oil passage 41b in communication with each other and cuts off the oil passage 41a from the oil passage 43. Thus, the hydraulic operating fluid, having been put out from the main pump 6 and passed through the control valve 9, travels back into the hydraulic operating fluid tank 8 via the oil passages 41a and 41b. In this state, the oil passage 44a is cut off from the oil passage 44b by the assist valve 20. In addition, no power is being generated at the generator/motor 24. As the engine 1 is started up, exhaust gas travels through the exhaust pipe 2 and the DPF 3 before it is released to the outside (into the atmosphere). PM contained in the exhaust gas is trapped in the DPF 3.

As long as the temperature of the exhaust gas remains at a high level, the PM trapped at the DPF 3 will be burnt off through the self regeneration function of the DPF 3 and thus, the DPF 3 will not become clogged with PM. However, if the temperature of the exhaust gas is sustained at a low level, the PM trapped at the DPF 3 will not be burnt off and, as a result, the DPF 3 will gradually become clogged with PM.

In order to address this issue, any clogging that may have occurred at the DPF 3 is detected based upon the fore/aft pressure difference ΔPf at the DPF 3 detected by the exhaust pressure sensor 4 at the hydraulic excavator 100 achieved in the embodiment. If the fore/aft pressure difference ΔPf exceeds a pressure difference upper limit value ΔPfh set in advance in correspondence to the engine rotation rate and a temperature Tf of the exhaust gas detected by the exhaust temperature sensor 5 is less than a predetermined temperature Tfl, the control circuit 23 controls various units, as will be described below, so as to execute the following regeneration processing for the DPF 3. It is to be noted that if the temperature Tf of the exhaust gas detected by the exhaust temperature sensor 5 is equal to or higher than the predetermined temperature Tfl, the PM, having been trapped at the DPF 3, will be burnt off through the self regeneration function of the DPF 3 and thus, there will be no need for executing the regeneration processing for the DPF 3 described below. Namely, the following requirements must be met for regeneration processing for the DPF 3 to start in the first embodiment; the fore/aft pressure difference ΔPf exceeds the pressure difference upper limit value ΔPfh and the temperature Tf of the exhaust gas is less than the predetermined temperature Tfl.

The control circuit 23 reads the fore/aft pressure difference ΔPf detected for the DPF 3 by the exhaust pressure sensor 4 and the rotation speed Neng of the engine 1 detected by the engine rotation rate sensor 7. The regeneration need determining unit 23a in the control circuit 23 then determines whether or not the fore/aft pressure difference ΔPf at the DPF 3 exceeds the pressure difference upper limit value ΔPfh set in advance in correspondence to the engine rotation speed Neng. In addition, the control unit 23 determines whether or not the temperature Tf of the exhaust gas detected by the exhaust temperature sensor 5 is less than the predetermined temperature Tf1. If the regeneration need determining unit 23a determines that the fore/aft pressure difference ΔPf at the DPF 3 exceeds the pressure difference upper limit value ΔPfh and the control circuit 23 determines that the exhaust gas temperature Tf is less than the predetermined temperature Tfl, the load control unit 23c in the control circuit 23 controls the pressure accumulation valve 15 so as to set the oil passage 41a and the oil passage 43 in communication with each other. As a result, the pressure oil put out from the main pump 6 is delivered to the accumulator 18 via the control valve 9, thereby starting pressure accumulation at the accumulator 18.

It is to be noted that if a pressure Pac at the accumulator 18 detected via the pressure sensor 19 prior to the start of pressure accumulation at the accumulator 18 exceeds an accumulated pressure upper limit value Pach, the load control unit 23c controls the pressure accumulation valve 15 so as to set the oil passage 41a in communication with the oil passage 41b. The load control unit 23c then controls various units so as to start power generation at the generator/motor 24 as will be explained later. It is desirable to select the highest possible pressure value within, for instance, the range in which the durability of the accumulator 18 is assured for the accumulated pressure upper limit value Pach, in order to maximize the quantity of energy accumulated at the accumulator 18.

Once the pressure oil put out from the main pump 6, the flow of which has been directed back into the hydraulic operating fluid tank 8 via the control valve 9 and the pressure accumulation valve 15, starts to be delivered to the accumulator 18 as the pressure accumulation valve 15 is switched over as described above, the drive load on the main pump 6 increases. In response, the engine control circuit 1a controls the engine 1 so as to increase the engine torque by an extent corresponding to the increase in the drive load. In other words, the engine control circuit 1a controls the engine 1 so as to increase the output torque while sustaining the rotation rate at the engine 1 at a constant value by increasing the amount of fuel injected into the engine 1.

Even while the rotation rate of the engine 1 remains at a constant value, the temperature Tf of the exhaust gas is bound to rise as the output torque increases. As a result, the self regeneration function of the DPF 3 begins fast-burning the PM trapped at the DPF 3, thereby unclogging the DPF 3. The energy resulting from the increase in the engine output is accumulated as pressure energy at the accumulator 18. This means that the additional motive power of the engine 1, having been output in order to raise the exhaust gas temperature Tf is salvaged via the motive power absorbing device 200.

Since the capacity of the accumulator 18 is limited, the load control unit 23c controls the pressure accumulation valve 15 so as to set the oil passage 41 a in communication with the oil passage 41b once the pressure Pac at the accumulator 18 detected via the pressure sensor 19 exceeds the accumulated pressure upper limit value Pach. As a result, the pressure oil put out from the main pump 16 is directed back into the hydraulic operating fluid tank 8 via the control valve 9 and the pressure accumulation valve 15, resulting in a reduction in the drive load on the main pump 6, which has been increased. If this state is sustained, the engine torque will decrease and the temperature Tf of the exhaust gas will fall.

Accordingly, control is executed in the embodiment so that the temperature Tf of the exhaust gas is raised as has been described earlier by starting power generation at the generator/motor 24 (power storage into the battery 26) and thus increasing the load on the engine 1 if a voltage Vb at the battery 26 detected by the battery voltage sensor 27 is equal to or less than a predetermined voltage Vbh. In more specific terms, the load control unit 23c controls the inverter/converter 25 so as to supply power generated at the generator/motor 24 to the battery 26 on condition that the voltage Vb at the battery 26 detected by the battery voltage 27 is equal to or less than the predetermined voltage Vbh. As a result, the energy attributed to the increase in the engine output is accumulated in the battery 26 as electric energy. Namely, the excess motive power of the engine 1, having been output in order to raise the exhaust gas temperature Tf is salvaged via the motive power absorbing device 200.

It is to be noted that if the voltage Vb at the battery 26 detected by the battery voltage sensor 27 before starting power generation at the generator/motor 24 exceeds the predetermined voltage Vbh, the control circuit 23 controls the various units so as to execute post-injection, as will be described in detail later, without generating any power at the generator/motor 24.

Providing power generated at the generator/motor 24 to the battery 26 as described above may cause the voltage Vb at the battery 26 detected by the battery voltage sensor 27 to increase to a level beyond the predetermined voltage Vbh. In such a case, the load control unit 23c controls the inverter/converter 25 so as to stop supplying power generated at the generator/motor 24 to the battery 26 and thus terminates power generation at the generator/motor 24 in order to protect the battery 26 from an overcharge. As a result, the load on the engine 1 will decrease, which, in turn, will lead to lowered engine torque and a decrease in the exhaust gas temperature Tf.

In the situation described above, the temperature Tf of the exhaust gas is raised through post-injection in the embodiment. More specifically, the load control unit 23c outputs a control signal for the engine control unit 1a with an instruction for post-injection. In response, the engine control circuit 1a controls the engine 1 so that fuel is injected during the expansion stroke of the engine 1.

As the exhaust gas temperature Tf is raised as described above, burning of the PM having been trapped in the DPF 3 is prompted and the DPF 3 is thus unclogged, which, in turn, leads to a decrease in the fore/aft pressure difference ΔPf at the DPF 3. Subsequently, once the fore/aft pressure difference ΔPf at the DPF 3 becomes equal to or less than a pressure difference lower limit value Δpf1 set in advance in correspondence to the engine rotation rate, the control circuit 23 ends the regeneration processing executed to regenerate the DPF 3.

Namely, if the regeneration completion determining unit 23b determines that the fore/aft pressure difference ΔPf at the DPF 3 is equal to or less than the pressure difference lower limit value ΔPf1 while pressure oil is being supplied to the accumulator 18, the load control unit 23c controls the pressure accumulation valve 15 so as to set the oil passage 41a in communication with the oil passage 41b. If, on the other hand, the regeneration completion determining unit 23b determines that the fore/aft pressure difference ΔPf is equal to or less than the pressure difference lower limit value Δpf1 while power generated at the generator/motor 24 is being provided to the battery 26, the load control unit 23c controls the inverter/converter 25 so as to stop supplying the power generated at the generator/motor 24 to the battery 26. Through either of these measures, the load on the engine 1 will be reduced and, accordingly, the engine control circuit 1a will execute control so that fuel, having been injected at the engine 1 at a raised level, will be injected in reduced quantity.

If the regeneration completion determining unit 23b determines that the fore/aft pressure difference ΔPf at the DPF 3 is equal to or less than the pressure difference lower limit value ΔPf1 while post-injection is underway, the load control unit 23c outputs a control signal for the engine control circuit 1a with an instruction for post-injection termination. In response, the engine control circuit 1a halts the fuel injection during the expansion stroke of the engine 1.

As described above, the embodiment is achieved by adopting a structure in which priority is given to accumulating the engine output, which is increased while the regeneration processing executed to regenerate the DPF 3 is underway, at the accumulator 18 as pressure energy over storing the increased engine output in the battery 26 as electric energy. This structure is adopted because better efficiency is assured by accumulating the engine output, increased for purposes of PM removal, as pressure energy at the accumulator 18, rather than storing the increased engine output in the battery 26 as electric energy. In other words, the engine output, having been increased for purposes of PM removal, will need to be first converted to electric energy (AC power) via the generator/motor 24 before it can be stored into the battery 26 as electric energy. The AC power generated at the generator/motor 24 will next need to be converted to DC power at the inverter/converter 25 before it can finally be stored into the battery 26. Furthermore, in order to allow electric energy stored in the battery 26 to be converted, via the generator/motor 24, to kinetic energy to be used to assist drive of the main pump 6, the DC power stored in the battery 26 will first need to be converted, via the inverter/converter 25, to AC power to be used to drive the generator/motor 24. This means that more significant energy conversion loss is bound to occur through these conversion steps, compared to the extent of energy loss occurring when the engine output, having been increased for purposes of PM removal, is accumulated at the accumulator 18 as pressure energy.

Accordingly, it is possible to improve the fuel efficiency by minimizing the energy conversion loss such as that described above by giving priority to accumulating the engine output, having been increased during the regeneration processing executed to regenerate the DPF 3, at the accumulator 18 as pressure energy over storing the increased engine output in the battery 26 as electric energy, as in the embodiment.

### - Utilization of the motive power salvaged via the motive power absorbing device 200 -

The pressure oil, having been accumulated at the accumulator 18 as described above, is used to drive the hydraulic motor 21. In more specific terms, upon determining that the pressure Pac at the accumulator 18, detected by the pressure sensor 19, is equal to or greater than a predetermined pressure P1 and that the regeneration processing executed to regenerate the DPF 3 as described earlier is not underway, the control circuit 23 calculates an operation quantity indicating the extent to which the operation lever 10 has been operated based upon the pressure readings provided by the pressure sensors 13 and 14. Then, upon determining that the operation quantity, having been calculated for the operation lever 10, is equal to or greater than a predetermined operation quantity, the control circuit 23 adjusts the extent of displacement of the hydraulic motor 21 in correspondence to the operation quantity having been calculated, and also controls the assist valve 20 so as to set the oil passage 44a in communication with the oil passage 44b.

As a result, the pressure oil having been accumulated at the accumulator 18 drives the hydraulic motor 21. Since the output shaft of the hydraulic motor 21 is directly connected to the input shaft of the main pump 6, as has been explained earlier, drive of the main pump 6 by the engine 1 is assisted by the hydraulic motor 21. In other words, the motive power, having been salvaged via the motive power absorbing device 200, is utilized as a drive force for driving the main pump 6. It is to be noted that when drive of the main pump 6 is assisted by the hydraulic motor 21, the load on the engine 1 will be reduced. This, in turn, will reduce the fuel consumption at the engine 1.

As the operation quantity at the operation lever 10 decreases after the hydraulic motor 21 starts assisting drive of the main pump 6, drive of the main pump 6 no longer requires as much assistance. Accordingly, the control circuit 23 calculates the operation quantity at the operation lever 10 based upon the pressure readings provided by the pressure sensors 13 and 14 and upon determining that the operation quantity at the operation lever 10 is less than a predetermined operation quantity, it controls the assist valve 20 so as to cut off the communication between the oil passage 44a and the oil passage 44b.

If the operation quantity at the operation lever 10 increases after halting the assistance in drive of the main pump 6, the need for assisting drive of the main pump 6 increases. Accordingly, the control circuit 23 calculates the operation quantity at the operation lever 10 based upon the pressure readings provided by the pressure sensors 13 and 14 and upon determining that the operation quantity at the operation lever 10 is equal to or greater than a predetermined operation quantity, it controls the assist valve 20 so as to set the oil passage 44a in communication with the oil passage 44b.

It is to be noted that once the pressure Pac at the accumulator 18 detected by the pressure sensor 19 becomes equal to or less than the predetermined pressure P1, i.e., once sufficient pressure oil is no longer accumulated at the accumulator 18, the control circuit 23 controls the assist valve 20 so as to cut off communication between the oil passage 44a and the oil passage 44b.

The power stored in the battery 26 as described above is utilized to drive the generator/motor 24. In more specific terms, upon determining that the voltage Vb at the battery 26 is equal to or greater than a predetermined voltage V1 and that the regeneration processing executed to regenerate the DPF 3 as described earlier is not underway, the control circuit 23 calculates the operation quantity at the operation lever 10 based upon the pressure readings from the pressure sensors 13 and 14. Then, upon determining that the operation quantity calculated for the operation lever 10 is equal to or greater than a predetermined operation quantity, the control circuit 23 controls the inverter/converter 25 so as to drive the generator/motor 24 in correspondence to the calculated operation quantity. Namely, the control circuit 23 controls the inverter/converter 25 so as to adjust the voltage, the frequency and the like of the power applied to the generator/motor 24 in correspondence to the calculated operation quantity.

As a result, the power, having been stored in the battery 26, is used to drive the generator/motor 24. Since the rotating shaft of the generator/motor 24 is directly connected to the input shaft of the main pump 6, as explained earlier, the generator/motor 24 is able to assist the engine 1 in drive of the main pump 6. Namely, the motive power, having been salvaged via the motive power absorbing device 200, is utilized as a drive force for driving the main pump 6. It is to be noted that when drive of the main pump 6 is assisted by the generator/motor 24, the load on the engine 1 will be reduced. This, in turn, will reduce the fuel consumption at the engine 1.

As the operation quantity at the operation lever 10 decreases after assistance in drive of the main pump 6 starts, drive of the main pump 6 no longer requires as much assistance. Accordingly, the control circuit 23 calculates the operation quantity at the operation lever 10 based upon the pressure readings provided by the pressure sensors 13 and 14 and upon determining that the operation quantity at the operation lever 10 is less than a predetermined operation quantity, it controls the inverter/converter 25 so as to halt power supply from the battery 26 to the generator/motor 24.

If the operation quantity at the operation lever 10 increases after halting the assistance in drive of the main pump 6, the need for assisting drive of the main pump 6 increases. Accordingly, the control circuit 23 calculates the operation quantity at the operation lever 10 based upon the pressure readings provided by the pressure sensors 13 and 14 and upon determining that the operation quantity at the operation lever 10 is equal to or greater than a predetermined operation quantity, it allows the generator/motor 24 to resume assisting in drive of the main pump 6, as described earlier.

It is to be noted that once the voltage Vb at the battery 26 becomes equal to or less than the predetermined voltage V1, i.e., once the remaining battery power in the battery 26 becomes low, the control circuit 23 ensures that an over-discharge does not occur at the battery 26 by controlling the inverter/converter 25 so as to halt the power supply from the battery 26 to the generator/motor 24.

The embodiment is achieved by adopting a structure whereby the pressure energy accumulated at the accumulator 18 is utilized with priority over the electric power energy stored in the battery 26. The rationale for this prioritization is that better efficiency is achieved by accumulating the engine output increased for purposes of PM removal at the accumulator 18 as pressure energy rather than by storing the increased engine output in the battery 26 as electric energy, as has been explained earlier. Accordingly, as long as the pressure Pac at the accumulator 18 remains equal to or higher than the predetermined pressure P1, the control circuit 23 controls the various units so as to utilize the pressure energy accumulated at the accumulator 18 for drive of the hydraulic motor 21, regardless of the voltage Vb at the battery 26. Subsequently, the pressure Pac at the accumulator 18 may fall to a level below the predetermined pressure P1. Under such circumstances, the control circuit 23 controls the various units so as to utilize the electric energy stored in the battery 26 in the drive of the hydraulic motor 21 if the voltage Vb at the battery 26 is equal to or greater than the predetermined voltage V1.

### - Flowchart -

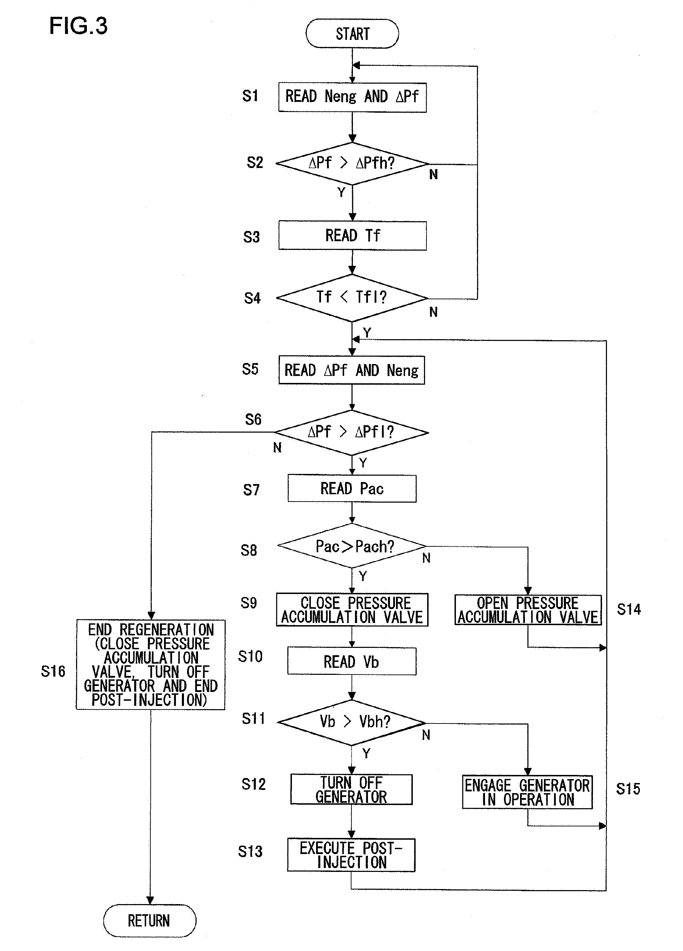

FIG. 3 presents a flowchart providing operational details of the regeneration processing executed, as described earlier, to regenerate the DPF 3. As an ignition switch (not shown) of the hydraulic excavator is turned on, this processing is started up and that program is executed by the control circuit 23. In step S1, the control circuit 23 reads the fore/aft pressure difference ΔPf at the DPF 3 detected by the exhaust pressure sensor 4 and the rotation speed Neng at the engine 1 detected by the engine rotation rate sensor 7, before the operation proceeds to step S2.

In step S2, the regeneration need determining unit 23a determines whether or not the fore/aft pressure difference ΔPf at the DPF 3, having been read in step S1, exceeds the pressure difference upper limit value ΔPfh corresponding to the rotation speed Neng having been read in step S1. If the regeneration need determining unit 23a makes a negative determination in step S2, the operation returns to step S1. However, upon making an affirmative determination in step S2, the operation proceeds to step S3, in which the control circuit 23 reads the temperature Tf of the exhaust gas detected by the exhaust temperature sensor 5, and then the operation proceeds to step S4. In step S4, the control circuit 23 determines whether or not the temperature Tf of the exhaust gas having been read in step S3 is less than the predetermined temperature Tfl.

If the control circuit 23 makes a negative determination in step S4, the operation returns to step S1. However, if an affirmative determination is made in step S4, the operation proceeds to step S5, in which the control circuit 23 reads the fore/aft pressure difference ΔPf at the DPF 3 detected by the exhaust pressure sensor 4 and the rotation speed Neng detected by the engine rotation rate sensor 7 before proceeding to step S6. In step S6, the regeneration completion determining unit 23c determines whether the fore/aft pressure difference ΔPf at the DPF 3 having been read in step S5 exceeds the pressure difference lower limit value Δpfl corresponding to the rotation speed Neng at the engine 1 having been read in step S5. Upon making an affirmative determination in step S6, the operation proceeds to step S7, in which the control circuit 23 reads the pressure Pac at the accumulator 18 detected by the pressure sensor 19 before the operation proceeds to step S8.

In step S8, the control circuit 23 determines whether or not the pressure Pac at the accumulator 18, having been read in step S7, exceeds the accumulated pressure upper limit value Pach. If a negative determination is made in step S8, the operation proceeds to step S14, in which the load control unit 23c controls the pressure accumulation valve 15 so as to set the oil passage 41a in communication with the oil passage 43, i.e., so as to open the pressure accumulation valve 15, before the operation returns to step S5.

If an affirmative determination is made in step S8, on the other hand, the operation proceeds to step S9, in which the load control unit 23c controls the pressure accumulation valve 15 so as to set the oil passage 41a and the oil passage 41b in communication with each other, i.e., so as to close the pressure accumulation valve 15, and then the operation proceeds to step S10. In step S10, the control circuit 23 reads the voltage Vb at the battery 26 detected by the battery voltage sensor 27 before the operation proceeds to step S11. In step S11, the control circuit 23 determines whether or not the voltage Vb at the battery 26, having been read in step S10, exceeds the predetermined voltage Vbh.

If a negative determination is made in step S11, the operation proceeds to step S15, in which the load control unit 23c controls the inverter/converter 25 so as to provide power generated at the generator/motor 24 to the battery 26, i.e., so as to engage the generator/motor 24 in operation as a generator, before the operation returns to step S5. If, on the other hand, an affirmative determination is made in step S11, the operation proceeds to step S12, in which the load control unit 23c controls the inverter/converter 25 so as to stop providing the power generated at the generator/motor 24 to the battery 26, i.e., so as to stop the generator, before the operation proceeds to step S13.

In step S13, the load control unit 23c outputs a control signal for the engine control circuit 1a with an instruction for post-injection, and then the operation returns to step S5.

If a negative determination is made in step S6, the operation proceeds to step S16, in which the load control unit 23c controls the various units so as to end the regeneration processing executed to regenerate the DPF 3. Namely, if the pressure oil is being supplied to the accumulator 18, the load control unit 23c controls the pressure accumulation valve 15 so as to set the oil passage 41a in communication with the oil passage 41b, as explained earlier. If, on the other hand, power generated at the generator/motor 24 is being provided to the battery 26, the load control unit 23c controls the inverter/converter 25 so as to stop providing the power generated at the generator/motor 24 to the battery 26. If post-injection is underway, the load control unit 23c outputs a control signal for the engine control circuit 1a with an instruction for post-inj ection termination. Once the regeneration processing for the DPF 3 ends, the operation makes a return.

The following advantages are achieved with the hydraulic excavator 100 in the first embodiment described above.
(1) Priority is given to accumulating engine output, increased while the regeneration processing executed to regenerate the DPF 3 is underway, at the accumulator 18 as pressure energy over storing the increased engine output in the battery 26 as electric energy. Through these measures, the engine output, having been increased for purposes of PM removal, can be salvaged in a form that will subsequently facilitate effective and efficient utilization of the engine output in the work machine, various parts of which are hydraulically driven. This, in turn, assures a high level of efficiency in energy salvaging and in the utilization of salvaged energy and consequently, better fuel efficiency is achieved.

Namely, by accumulating engine output, having been increased for purposes of PM removal, at the accumulator 18 as pressure energy, the pressure oil accumulated at the accumulator 18 can be used to drive the hydraulic motor 21 and the hydraulic motor 21 thus driven is able to assist in drive of the main pump 6. If, on the other hand, the engine output, having been increased for purposes of PM removal, is stored in the battery 26 as electric energy, the energy conversion loss will be greater than the loss occurring when the engine output, having been increased for purposes of PM removal, is accumulated at the accumulator 18 as pressure energy, as described above. In other words, by giving priority to accumulating the engine output, having been increased for purposes of PM removal, at the accumulator 18 as pressure energy, the extent of energy conversion loss can be minimized and thus, better fuel efficiency can be assured.

(2) Since the volumetric capacity of the accumulator 18 is limited, it may become no longer possible, while the regeneration processing executed for the DPF 3 is underway, to accumulate the entire engine output, having been increased in order to raise the exhaust gas temperature, at the accumulator 18 as pressure energy. However, this issue is addressed by adopting a structure whereby, once the pressure Pac at the accumulator 18 exceeds the accumulated pressure upper limit value Pach, the engine output, having been increased for purposes of PM removal, is stored into the battery 26 as electric energy instead of accumulating it at the accumulator 18. Thus, the engine output, having been increased for purposes of PM removal, is never wasted and an improvement in fuel efficiency is assured.

(3) Once the voltage Vb at the battery 26 exceeds the predetermined voltage Vbh, the power storage in the battery 26 is terminated and post-injection is executed. Through these measures, it is ensured that the exhaust gas temperature Tf is allowed to remain high and, as a result, the DPF 3 can be regenerated in a reliable manner.

(4) Once the fore/aft pressure difference ΔPf at the DPF 3 exceeds the pressure difference upper limit value ΔPfh, regeneration processing is executed to regenerate the DPF 3 by increasing the output of the engine 1 and raising the exhaust temperature through the engine output increase. As a result, the DPF 3 never becomes clogged to a significant extent.

(5) Once the fore/aft pressure difference ΔPf at the DPF 3 becomes equal to or less than the pressure difference lower limit value ΔPf1, the regeneration processing executed for the DPF 3 ends. In other words, as long as the fore/aft pressure difference ΔPf at the DPF 3 is above the pressure difference lower limit value ΔPf1, the regeneration processing is continuously executed for the DPF 3. Through these measures, it is ensured that the DPF 3 is regenerated with a high level of reliability.

(6) The engine output, having been increased for purposes of PM removal, is salvaged via the accumulator 18. Then, the hydraulic motor 21 is driven with the pressure oil at the accumulator 18 so as to provide assistance in drive of the main pump 6 by the engine 1. Through this process, the engine output, increased for purposes of regenerating the DPF 3, is temporarily accumulated as pressure energy by using the pressure oil as a medium and the hydraulic motor 21 can subsequently be driven with high efficiency by using the pressure oil without requiring any energy conversion. As a result, the extent to which the fuel efficiency is compromised due to regeneration of the DPF 3 can be minimized.

(7) Drive of the main pump 6 by the engine 1 is assisted by driving the generator/motor 24 with the power stored in the battery 26. Through this process, the engine output, having been increased for purposes of regenerating the DPF 3, and stored as electric energy on a temporary basis, can later be utilized with high efficiency as a drive force for driving the main pump 6. As a result, the extent to which the fuel efficiency is compromised due to regeneration of the DPF 3 can be minimized.

(8) Priority is given to utilization of the pressure energy accumulated at the accumulator 18 over utilization of electric power energy stored in the battery 26. Through these measures, the extent of loss occurring through energy conversion is minimized, which, in turn, assures high efficiency and a reduction in fuel consumption.

### - Second Embodiment -

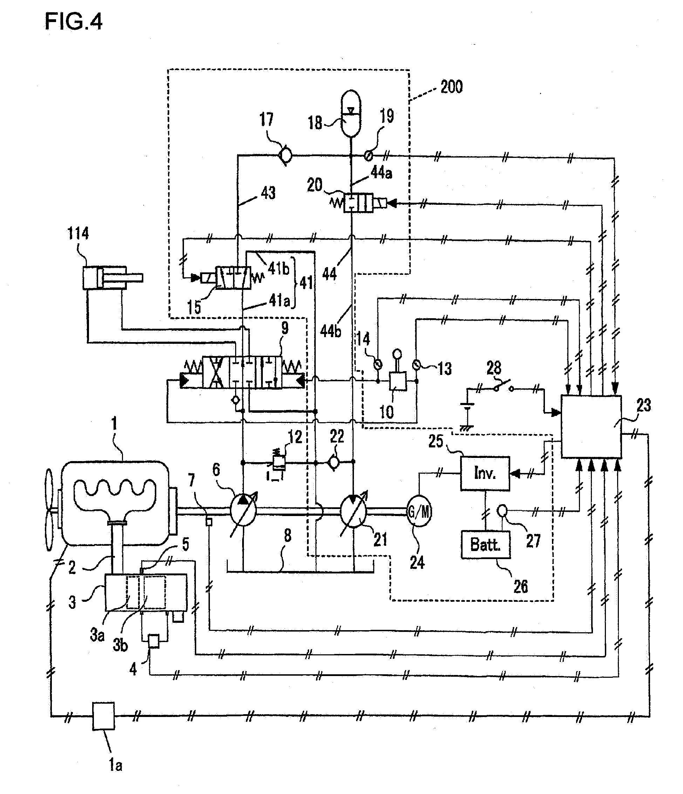

In reference to FIGS. 4, 5 and 10, the second embodiment of the work machine according to the present invention will be described. The following explanation will focus on features of the second embodiment that differentiate it from the first embodiment, with the same reference numerals assigned to structural elements identical to those in the first embodiment. Any aspect of the embodiment that is not specially noted is identical to the corresponding aspect of the 1st embodiment. The second embodiment is distinguishable from the first embodiment primarily in that the regeneration processing for the DPF 3 starts in response to an instruction issued by an operator.

FIG. 4 shows the hydraulic circuit in the hydraulic excavator 100 achieved in the second embodiment. It is to be noted that FIG. 4 does not include illustrations of the cylinders 116 and 118, i.e., the cylinders other than the boom cylinder 114, or illustrations of the control valves and the operation levers for these cylinders 116 and 118. A forced regeneration switch 28 is connected to the control circuit 23 in the embodiment. The forced regeneration switch 28, which is operated by the operator wishing to issue an instruction for starting the regeneration processing for the DPF 3, may be installed in, for instance, the operator's cab 104.

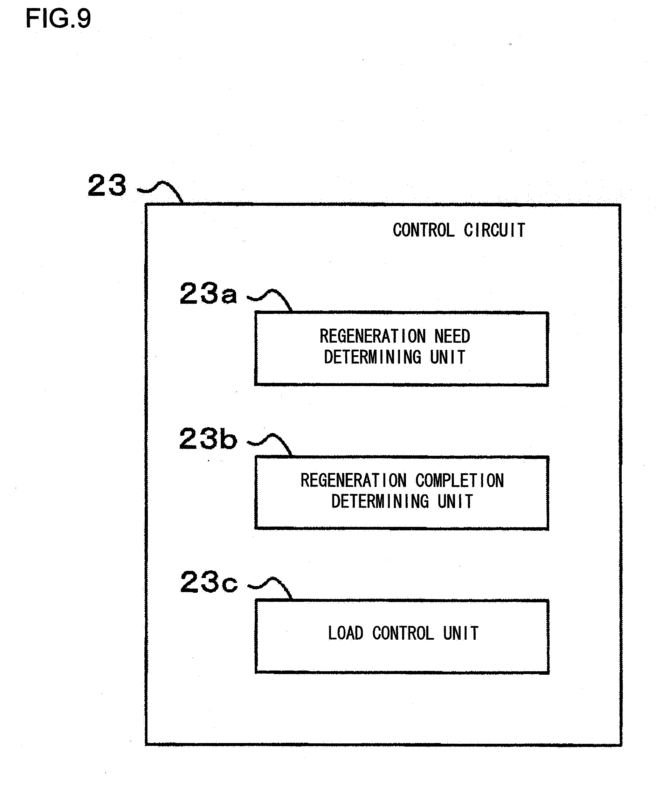

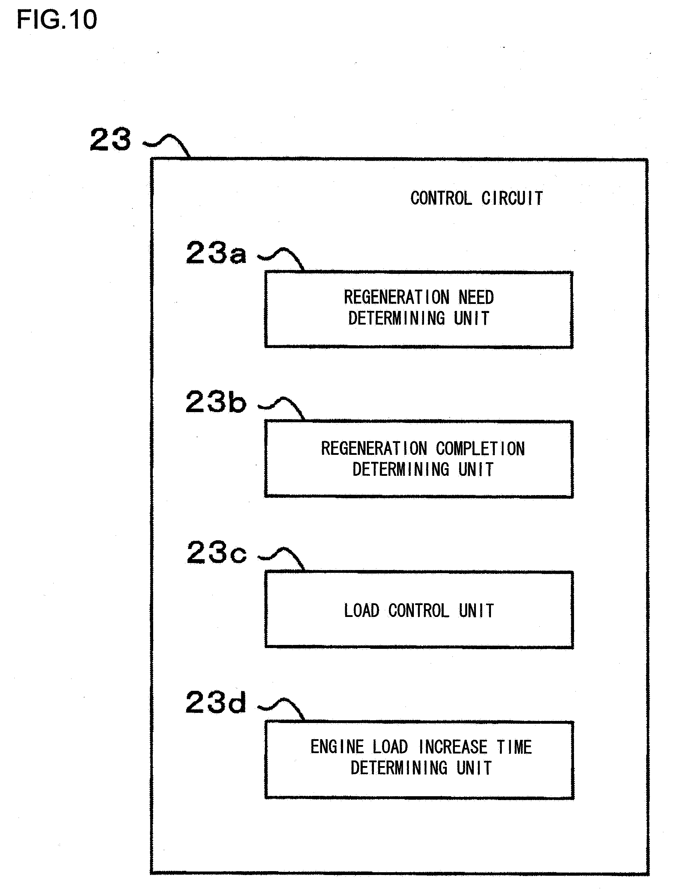

As the block diagram in FIG. 10 indicates, the control circuit 23 has a function achieved in the form of an engine load increase time determining unit 23d, in addition to the functions of the control circuit 23 in the first embodiment described in reference to FIG. 9. As will be described in detail later, the engine load increase time determining unit 23d determines whether or not the load control unit 23c has been sustaining the load on the engine 1 in an increased state over a predetermined length of time or more, i.e., whether or not a specific length of time set in advance has elapsed since the forced regeneration switch 28 was operated.

Once the forced regeneration switch 28 is turned on in response to an operator operation, the control circuit 23 starts the regeneration processing to regenerate the DPF 3, just as the regeneration processing starts in the first embodiment when the fore/aft pressure difference ΔPf is determined to exceed the pressure difference upper limit value ΔPfh and the exhaust gas temperature Tf is determined to be less than the predetermined temperature Tf1. In more specific terms, the requirements for allowing the regeneration processing for the DPF 3 to start in the first embodiment described earlier are that the fore/aft pressure difference ΔPf is greater than the pressure difference upper limit value ΔPfh and that the exhaust gas temperature Tf is less than the predetermined temperature Tf1. In the second embodiment, on the other hand, the requirement for allowing the regeneration processing for the DPF 3 to start is that the forced regeneration switch 28 is turned on.

Even more specifically, as the forced regeneration switch 28 is turned on, the regeneration need determining unit 23a determines that the DPF 3 needs to be regenerated. Then, the load control unit 23c controls the pressure accumulation valve 15 so as to set the oil passage 41a in communication with the oil passage 43. As a result, the pressure oil put out from the main pump 6 is delivered to the accumulator 18 via the control valve 9, resulting in an increase in the drive load at the main pump 6. This, in turn, leads to an increase in the quantity of fuel injected at the engine 1, further leading to an increase in the output torque and a rise in the exhaust gas temperature Tf, as has been explained earlier.

In this state, the self regeneration function of the DPF 3 prompts burning of the PM trapped at the DPF 3, and thus, the DPF 3 becomes unclogged. The energy attributable to the increase in the engine output is accumulated at the accumulator 18 as pressure energy.

It is to be noted that even after the forced regeneration switch 28 is turned on, the load control unit 23c controls the pressure accumulation valve 15 so as to set the oil passage 41a and the oil passage 41b in communication with each other, as long as the pressure Pac at the accumulator 18 detected by the pressure sensor 19 exceeds the accumulated pressure upper limit value Pach. The load control unit 23c then controls various units so as to start power generation at the generator/motor 24, as will be described in detail later.

The load control unit 23c controls the pressure accumulation valve 15 so as to set the oil passage 41a in communication with the oil passage 41b once the pressure Pac at the accumulator 18 detected via the pressure sensor 19 exceeds the accumulated pressure upper limit value Pach. As a result, the pressure oil put out from the main pump 16 is allowed to travel back into the hydraulic operating fluid tank 8 via the control valve 9 and the pressure accumulation valve 15, which, in turn, results in a reduction in the drive load on the main pump 6, which has been increased.

The load control unit 23c then controls the inverter/converter 25 so as to provide the power generated at the generator/motor 24 to the battery 26. As a result, the load on the engine 1 increases and the exhaust gas temperature Tf is sustained at a raised level. The energy attributable to the increase in the engine output is stored as electric energy in the battery 26 in this situation.

It is to be noted that if the voltage Vb at the battery 26 detected by the battery voltage sensor 27 before starting power generation at the generator/motor 24 exceeds the predetermined voltage Vbh, the control circuit 23 controls the various units so as to execute post-injection, as will be described in detail later, without generating any power at the generator/motor 24.

If the voltage Vb at the battery 26 detected by the battery voltage sensor 27 is higher than the predetermined voltage Vbh, the load control unit 23c controls the inverter/converter 25 so as to stop providing the power generated at the generator/motor 24 to the battery 26. As a result, power generation at the generator/motor 24 is terminated. This in turn, leads to a decrease in the load on the engine 1.

The load control unit 23c next outputs a control signal for the engine control circuit 1a with an instruction for post-injection. In response, the engine control circuit 1a controls the engine 1 so as to execute post-injection, and thus, the temperature Tf of the exhaust gas is sustained at an elevated level.

In this embodiment, the load control unit 23c in the embodiment ends the regeneration processing executed for the DPF 3 if the regeneration completion determining unit 23b determines that the following requirements have been satisfied. Namely, the regeneration processing is terminated if the fore/aft pressure difference ΔPf at the DPF 3 becomes less than the pressure difference lower limit value ΔPf1 set in advance in correspondence to the engine rotation rate after the engine load increase time determining unit 23d determines that a predetermined length of time (preset regeneration time tset) has elapsed since the forced regeneration switch 28 was turned on (i.e., that the regeneration processing has been continuously underway over a length of time equal to or greater than the preset regeneration time tset). The preset regeneration time tset is a predetermined length of time that is deemed necessary for the regeneration processing for the DPF 3. This time length may be set within a range of, for instance, several minutes through several tens of minutes. It is to be noted that if the fore/aft pressure difference ΔPf is still equal to or greater than the pressure difference lower limit value Δpf1 after the preset regeneration time tset has elapsed, the control circuit 23 allows the regeneration processing to be continuously executed for the DPF 3.

If the engine load increase time determining unit 23d determines that the preset regeneration time tset has elapsed and the fore/aft pressure difference ΔPf is less than the pressure difference lower limit value ΔPf while pressure oil is being supplied to the accumulator 18, the regeneration completion determining unit 23b determines that the regeneration of the DPF 3 has been completed. In this case, the load control unit 23c controls the pressure accumulation valve 15 so as to set the oil passage 41 a in communication with the oil passage 41b. If the engine load increase time determining unit 23d determines that the preset regeneration time tset has elapsed and the fore/aft pressure difference ΔPf is less than the pressure difference lower limit value Δpf1 while power generated at the generator/motor 24 is being provided to the battery 26, the regeneration completion determining unit 23d determines that the regeneration of the DPF 3 has been completed. In this case, the load control unit 23c controls the inverter/converter 25 so as to stop providing the power generated at the generator/converter 24 to the battery 26. Through either of these measures, the load on the engine 1 will be reduced and, accordingly, the engine control circuit 1a will execute control so that fuel, having been injected at the engine 1 at a raised level, will be injected in reduced quantity.

If the engine load increase time determining unit 23d determines that the preset regeneration time tset has elapsed and the fore/aft pressure difference ΔPf is less than the pressure difference lower limit value ΔPf1 while post-injection is underway, the regeneration completion determining unit 23b determines that the regeneration of the DPF 3 has been completed. In this case, the load control unit 23c outputs a control signal for the engine control circuit 1a with an instruction for ending the post-injection. In response, the engine control circuit 1a halts the post-injection.

### - Flowchart -

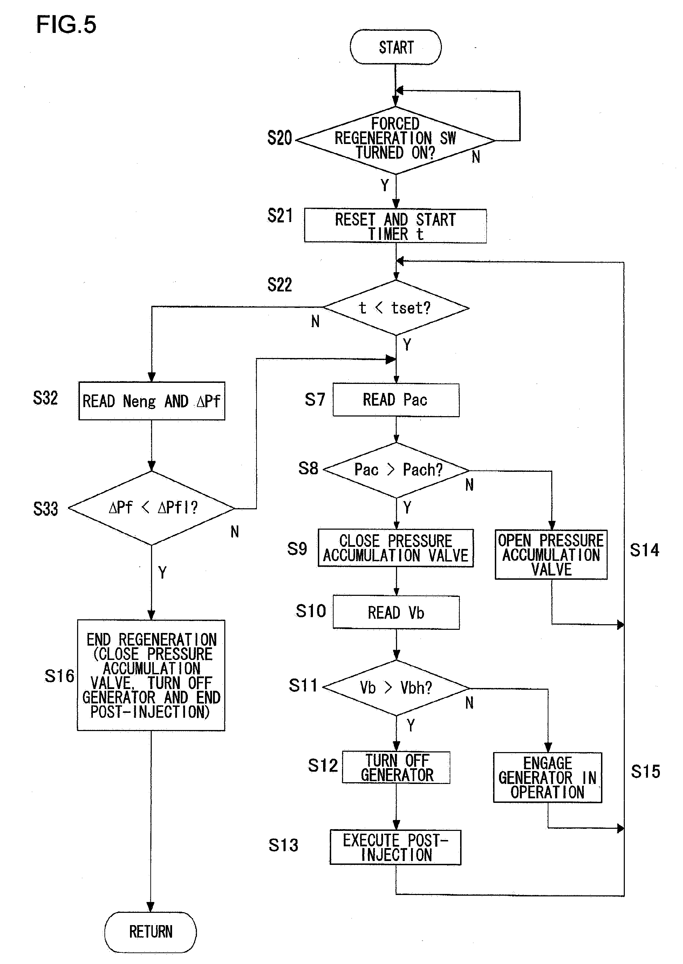

FIG. 5 presents a flowchart providing operational details of the regeneration processing executed to regenerate the DPF 3 in the second embodiment. As an ignition switch (not shown) of the hydraulic excavator is turned on, a program enabling this processing is started up and executed by the control circuit 23. In step S20, the operation waits in standby for the forced regeneration switch 28 to be turned on.

Upon making an affirmative determination in step S20, the operation proceeds to step S21, in which the engine load increase time determining unit 23d resets a timer t and then starts the timer t before the operation proceeds to step S22. In step S22, the engine load increase time determining unit 23d determines whether or not the time count on the timer t, having been started in step S21, is less than the preset regeneration time tset. If an affirmative determination is made by the engine load increase time determining unit 23d in step S22, the operation proceeds to step S7. The processing executed in steps S7 through S15 is identical to that executed in steps S7 through S15 in the first embodiment described in reference to the flowchart presented in FIG. 3. It is to be noted that once the processing in step S 14 or step S 15 is executed, the operation returns to step S22 in the second embodiment.

Upon making a negative determination in step S22, the operation proceeds to step S32, in which the control circuit 23 reads the fore/aft pressure difference ΔPf at the DPF 3 detected by the exhaust pressure sensor 4 and the rotation speed Neng at the engine 1 detected by the engine rotation rate sensor 7, and then the operation proceeds to step S33. In step S33, the regeneration completion determining unit 23b determines whether or not the fore/aft pressure difference ΔPf at the DPF 3, having been read in step S32, is less than the pressure difference lower limit value Δpf1 corresponding to the rotation speed Neng at the engine 1, having been read in step S32. If a negative determination is made in step S33, the operation proceeds to step S7. If, on the other hand, the regeneration completion determining unit 23b makes an affirmative determination in step S33, the operation proceeds to step S16. The processing executed in step S16 is identical to that executed in step S16 in the first embodiment, having been described in reference to the flowchart presented in FIG. 3.

In addition to the advantages of the first embodiment, the following advantages are achieved with the hydraulic excavator 100 in the second embodiment described above.
(1) During the regeneration processing executed for the DPF 3, which takes several minutes to several tens of minutes, the engine 1 needs to be continuously driven. For this reason, if the regeneration processing for the DPF 3 is automatically started immediately before a break or immediately before the workday ends, the operator will have to wait in standby until the regeneration processing for the DPF 3 ends, without turning off the engine 1 or the regeneration processing for the DPF 3 will have to be halted by turning off the engine 1.

However, the regeneration processing for the DPF 3 is started up just as the forced regeneration switch 28 enters an on state in response to an operator operation in the second embodiment. This means that the timing with which the regeneration processing for the BPF 3 is started can be determined by the operator so as to ensure that the regeneration processing is started only when there is no need to turn off the engine 1 immediately, e.g., at least 30 minutes before the start of a lunch break or the end of the workday. As a result, inconveniences such as those described above, i.e., the operator having to wait for the end of the regeneration processing executed for the DPF 3 before being able to turn off the engine 1 and the regeneration processing for the DPF 3 having to be halted by turning off the engine 1, can be avoided.

(2) The regeneration processing for the DPF 3 is allowed to end provided that the preset regeneration time tset has elapsed since the forced regeneration switch 28 was turned on and that the fore/aft pressure difference ΔPf at the DPF 3 is less than the pressure difference lower limit value ΔPf1. Thus, once the regeneration processing for the DPF 3 starts, the regeneration processing is continuously executed without interruption until at least the preset regeneration time tset elapses. As a result, reliable regeneration of the DPF 3 is assured. Furthermore, even after the preset regeneration time tset elapses, the regeneration processing for the DPF 3 is not terminated if the fore/aft pressure difference ΔPf at the DPF 3 remains equal to or greater than the pressure difference lower limit value ΔPf1, and thus, reliable regeneration of the DPF 3 is doubly assured.

### - Third Embodiment -

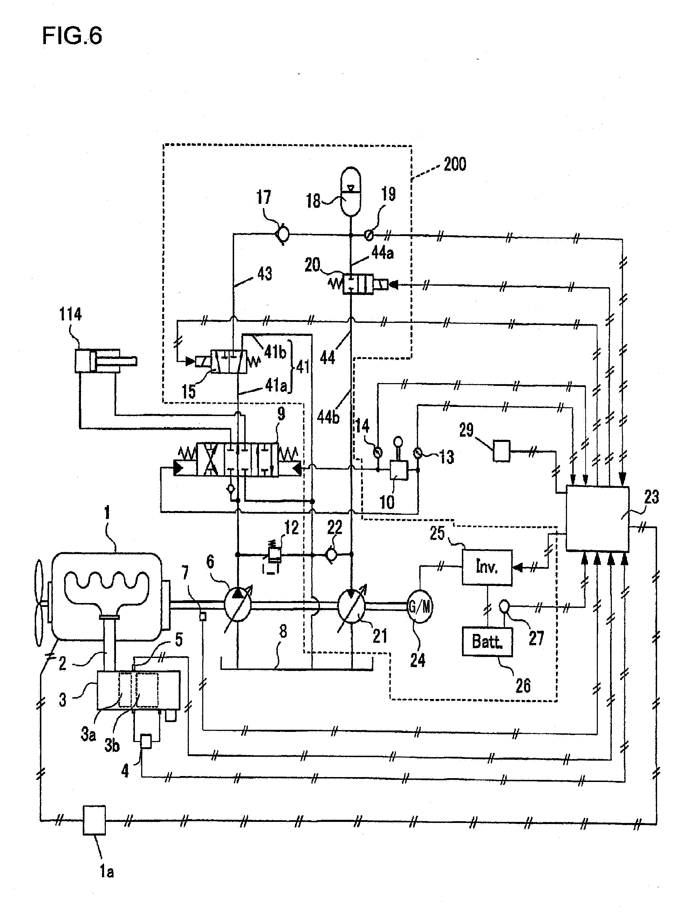

In reference to FIGS. 6, 7 and 11, the third embodiment of the work machine according to the present invention will be described. The following explanation will focus on features of the third embodiment that differentiate it from the first and second embodiments, with the same reference numerals assigned to structural elements identical to those in the first or second embodiment. Any aspect of the embodiment that is not specially noted is identical to the corresponding aspect of the first or second embodiment. The third embodiment is distinguishable from the first and second embodiments primarily in that the regeneration processing for the DPF 3 is started based upon the cumulative operating time of the work machine representing the total time length over which the work machine has been engaged in operation.

FIG. 6 shows the hydraulic circuit in the hydraulic excavator 100 achieved in the third embodiment. It is to be noted that FIG. 6 does not include illustrations of the cylinders 116 and 118, i.e., the cylinders other than the boom cylinder 114, or illustrations of the control valves and the operation levers for these cylinders 116 and 118. An hour meter 29 is connected to the control circuit 23 in this embodiment. The hour meter 29 is a timer used to count the cumulative operating time of the hydraulic excavator 100, i.e., the total operating time over which the engine 1 has been engaged in operation.

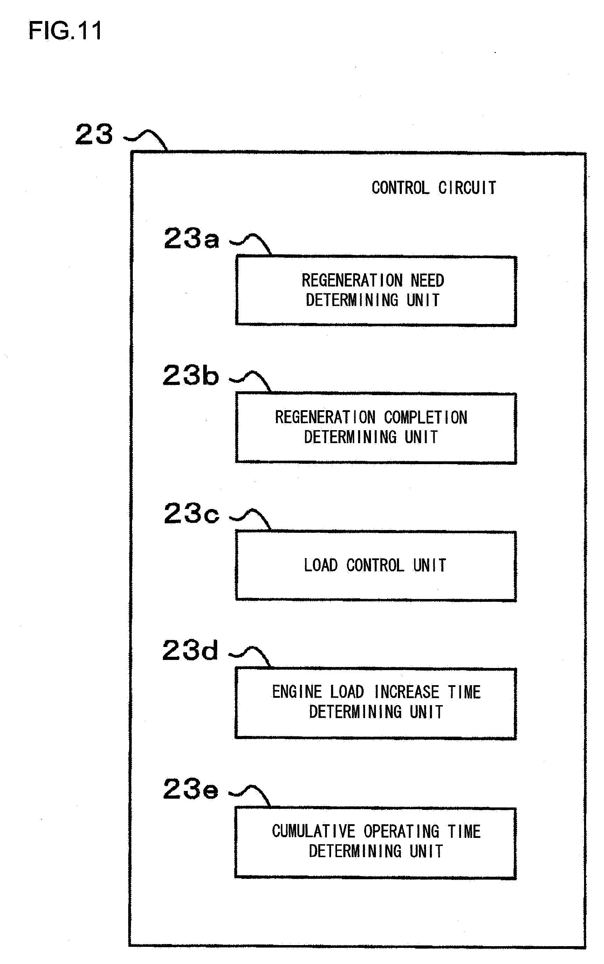

As the block diagram in FIG. 11 indicates, the control circuit 23 has a function achieved in the form of a cumulative operating time determining unit 23e in addition to the functions in addition to the functions of the control circuit 23 in the second embodiment described in reference to FIG. 10. As will be described in detail later, the cumulative operating time determining unit 23e determines whether or not the engine 1 has been engaged in operation over a length of time beyond a predetermined length of time following completion of regeneration of the DPF 3.

In the following description, Tb represents the cumulative operating time counted for the engine 1, upon completing the most recent regeneration processing for the DPF 3 and Tn represents the cumulative operating time counted for the engine at the current time point. The cumulative operating time Tb counted for the engine 1 when the most recent regeneration processing for the DPF 3 was completed is stored in a memory (not shown) within the control circuit 23. The cumulative operating time determining unit 23e reads the cumulative operating time Tb stored in the memory (not shown), reads the cumulative operating time counted for at the engine 1 at the current time point from the hour meter 29, and compares the two counts. Then, if the cumulative operating time determining unit 23e determines that the engine 1 has been engaged in operation over a length of time beyond the predetermined length of time (regeneration time interval ΔT) following completion of the regeneration processing most recently executed for the DPF 3, the load control unit 23c starts regeneration processing for the DPF 3 in much the same way as the regeneration processing is started in the second embodiment as the forced regeneration switch 28 enters an on state, as has been explained earlier.

Namely, the requirement for starting the regeneration processing for the DPF 3 in the second embodiment is that the forced regeneration switch 28 is turned on, as explained earlier. In the third embodiment, the requirement for starting the regeneration processing for the DPF 3 is that the cumulative operating time counted for the engine 1 after the completion of the regeneration processing most recently executed for the DPF 3 exceeds the regeneration time interval ΔT. The operations executed by the various units following the start of the regeneration processing for the DPF 3 are identical to those in the second embodiment and, for this reason, a detailed explanation is not provided. It is to be noted that once the regeneration processing for the DPF 3 is completed, the cumulative operating time determining unit 23e writes the cumulative operating time Tn counted for the engine one at the current time point over the cumulative operating time Tb (updates the cumulative operating time).

### - Flowchart -

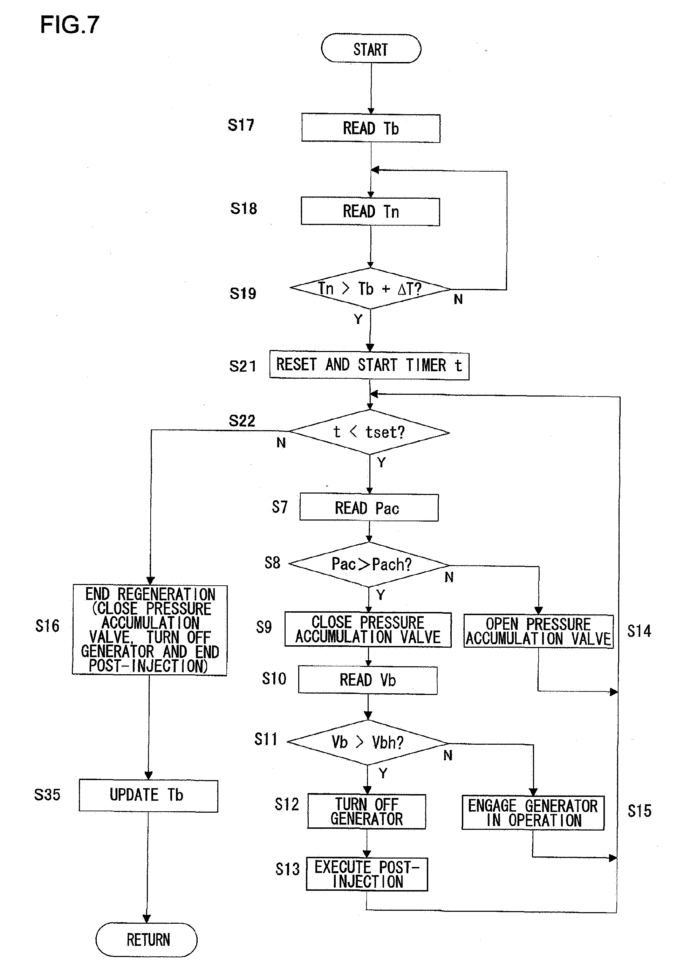

FIG. 7 presents a flowchart providing operational details of the regeneration processing executed to regenerate the DPF 3 in the third embodiment. As an ignition switch (not shown) of the hydraulic excavator is turned on, a program enabling this processing is started up and is executed by the control circuit 23. In step S 17, the control circuit 23 reads the cumulative operating time Tb stored in the memory (not shown) and then the operation proceeds to step S18. In step S18, the cumulative operating time determining unit 23e reads the cumulative operating time Tn counted for the engine 1 at the current time point from the hour meter 29, before the operation proceeds to step S 19.

In step S19, the cumulative operating time determining unit 23e compares the cumulative operating time Tb having been read in step S 17 with the cumulative operating time Tn having been read in step S18. The cumulative operating time determining unit 23e then determines whether or not the engine 1 has been engaged in operation following completion of the regeneration processing most recently executed for the DPF 3 over a length of time exceeding the regeneration time interval ΔT. If the cumulative operating time determining unit 23e makes a negative determination in step S19, the operation returns to step S 18. If, on the other hand, the cumulative operating time determining unit 23e makes an affirmative determination in step S19, the operation proceeds to step S21.

The processing in step S21, the processing in step S22 and the processing in step S7 and subsequent steps, to which the operation proceeds after making an affirmative determination in step S22, are all executed exactly as in steps assigned with matching step numbers in the flowchart presented in FIG. 5 in reference to which the second embodiment has been described.

Upon making a negative determination in step S22, the operation proceeds to step S16. The processing executed in step S16 is identical to that executed in step S16 in the flowchart presented in FIG. 3 in reference to which the first embodiment has been described. Once the processing in step S16 is executed, the operation proceeds to step S35, in which the cumulative operating time determining unit 23e updates the cumulative operating time Tb stored in the memory (not shown) with the cumulative operating time Tn counted for the engine 1 at the current time point, which is read from the hour meter 29, before making a return.

In addition to the advantages of the first and second embodiments, the following advantage is achieved with the hydraulic excavator 100 in the third embodiment described above.
(1) If the engine 1 is determined to have been engaged in operation over a length of time beyond the regeneration time interval ΔT following completion of the regeneration processing most recently executed for the DPF 3, the regeneration processing is started up to regenerate the DPF 3. Through these measures, it is ensured that the regeneration processing for the DPF 3 starts over regeneration time intervals ΔT, and that the DPF 3 never becomes clogged with PM since the DPF 3 is never left un-regenerated over an extended length of time.

### - Variations-

(1) In the first embodiment described earlier, the determination as to whether or not the regeneration processing has been completed is made based upon the fore/aft pressure difference ΔPf at the DPF 3. However, the present invention is not limited to this example, and the determination as to whether or not the regeneration processing has been completed may instead be made as in the second embodiment, i.e., based upon both the length of time over which the regeneration processing has been continually underway and the fore/aft pressure difference ΔPf at the DPF 3. As a further alternative, the determination as to whether or not the regeneration processing has been completed may be made as in the third embodiment, based upon the length of time over which the regeneration processing has been underway.

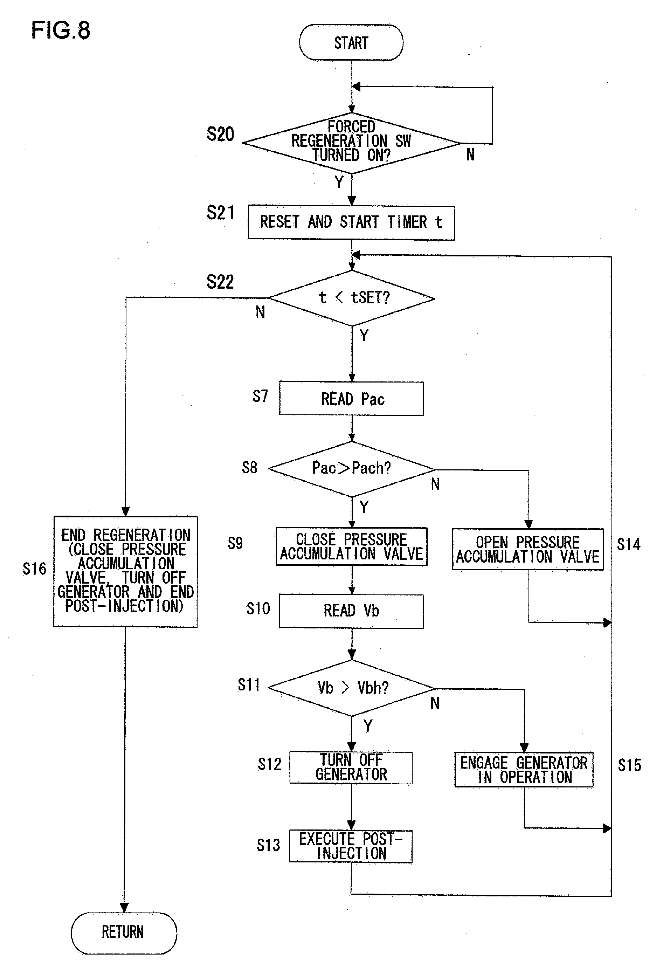

(2) While the determination as to whether or not the regeneration processing has been completed is made based upon both the length of time over which the regeneration processing has been underway and the fore/aft pressure difference ΔPf at the DPF 3 in the second embodiment described earlier, the present invention is not limited to this example. For instance, the determination as to whether or not the regeneration processing has been completed may instead be made as in the first embodiment based upon the fore/aft pressure difference ΔPf at the DPF 3. As an alternative, the determination as to whether or not the regeneration processing has been completed may be made as in the third embodiment, based upon the length of time over which the regeneration processing has been continually underway, as shown in FIG. 8.

(3) In the third embodiment described earlier, the determination as to whether or not the regeneration processing has been completed is made based upon the length of time over which the regeneration processing has been continually underway. However, the present invention is not limited to this example, and the determination as to whether or not the regeneration processing has been completed may instead be made as in the first embodiment based upon the fore/aft pressure difference ΔPf at the DPF 3. As a further alternative, the determination as to whether or not the regeneration processing has been completed may be made as in the second embodiment, i.e., based upon both the length of time over which the regeneration processing has been continually underway and the fore/aft pressure difference ΔPf at the DPF 3.

(4) While the present invention has been described by referring to a hydraulic excavator as an example of the work machine, the present invention is not limited to this example and may be adopted in other types of engine-driven work machines, such as a wheel loader and a crane.
(5) The embodiments and variations thereof described above may be adopted in any combination.

It is to be noted that the embodiments described above simply represent examples and the present invention is in no way limited to these examples as long as the features characterizing the present invention remain intact. Any other mode conceivable within the technical range of the present invention should, therefore, be considered to be within the scope of the present invention.

The disclosure of the following priority application is herein incorporated by reference:
Japanese Patent Application No. 2010-246578 filed November 2, 2010

## Claims

1. A work machine, comprising:
a hydraulic pump that is driven by an engine and puts out pressure oil;
a generator driven by the engine;
a collecting unit that is disposed in a discharge path through which exhaust gas from the engine passes and collects a collecting target contained in the exhaust gas;
a regeneration need determining unit that determines whether or not the collecting unit needs to be regenerated;
a regeneration completion determining unit that determines whether or not regeneration of the collecting unit has been completed;
a load control unit that causes an increase in a load on the engine if the regeneration need determining unit determines that the collecting unit needs to be regenerated and stops the increase in the load on the engine once the regeneration completion determining unit determines that regeneration of the collecting unit has been completed;
a pressure accumulating unit that accumulates pressure oil put out from the hydraulic pump as pressure energy, the pressure oil being attributable to output of the engine; and
a power storage unit that stores electric energy of power generated at the generator, the electric energy of power being attributable to the output of the engine, wherein:
as the regeneration need determining unit determines that the collecting unit needs to be regenerated, the load control unit causes the increase in the load on the engine by controlling the pressure accumulating unit so as to accumulate the pressure oil attributable to the output of the engine in the pressure accumulating unit as pressure energy from the hydraulic pump; and
once the pressure energy is accumulated to a level matching a pressure accumulation upper limit at the pressure accumulating unit, the load control unit causes the increase in the load on the engine by controlling the power storage unit so as to store the electric energy of power generated at the generator attributable to the output of the engine in the power storage unit.

2. A work machine according to claim 1, further comprising:
a regeneration instruction input unit that accepts an instruction for regenerating the collecting unit input by an operator, wherein:
once the instruction for regenerating the collecting unit input at the regeneration instruction input unit is accepted, the regeneration need determining unit determines that the collecting unit needs to be regenerated.

3. A work machine according to claim 1, further comprising:
a cumulative operating time determining unit that determines whether or not a cumulative operating time over which the work machine has been engaged in operation following completion of regeneration of the collecting unit has become equal to a predetermined length of time, wherein:
once the cumulative operating time determining unit determines that the cumulative operating time has become equal to the predetermined length of time, the regeneration need determining unit determines that the collecting unit needs to be regenerated.

4. A work machine according to claim 1, further comprising:
an exhaust gas passage resistance detection unit that detects an exhaust gas pressure difference between pressure of the exhaust gas manifesting at a point forward of the collecting unit and pressure of exhaust gas manifesting at a point rearward of the collecting unit in the discharge path, wherein:
if the exhaust gas pressure difference detected by the exhaust gas passage resistance detection unit is equal to or greater than a predetermined pressure difference, the regeneration need determining unit determines that the collecting unit needs to be regenerated.

5. A work machine according to any one of claims 1 through 3, further comprising:
an exhaust gas passage resistance detection unit that detects an exhaust gas pressure difference between pressure of the exhaust gas manifesting at a point forward of the collecting unit and pressure of exhaust gas manifesting at a point rearward of the collecting unit in the discharge path, wherein:
if the exhaust gas pressure difference, detected by the exhaust gas passage resistance detection unit after the regeneration need determining unit determines that the collecting unit needs to be regenerated, is equal to or less than a predetermined pressure difference set as a decision-making criterion for deciding whether or not regeneration of the collecting unit has been completed, the regeneration completion determining unit determines that regeneration of the collecting unit has been completed.

6. A work machine according to claim 4, wherein:
if the exhaust gas pressure difference, detected by the exhaust gas passage resistance detection unit after the regeneration need determining unit determines that the collecting unit needs to be regenerated, is equal to or less than a predetermined pressure difference set as a decision-making criterion for deciding whether or not regeneration of the collecting unit has been completed, the regeneration completion determining unit determines that regeneration of the collecting unit has been completed.

7. A work machine according to any one of claims 1 through 4, further comprising:
an engine load increase time determining unit that determines whether or not the increase in load on the engine has been sustained by the load control unit over a length of time equal to or greater than a predetermined length of time, wherein:
once the engine load increase time determining unit determines that the increase in load on the engine by the load control unit has been sustained over a length of time equal to or greater than the predetermined length of time, the regeneration completion determining unit determines that regeneration of the collecting unit has been completed.

8. A work machine according to any one of claims 1 through 3, further comprising:
an exhaust gas passage resistance detection unit that detects an exhaust gas pressure difference between pressure of the exhaust gas manifesting at a point forward of the collecting unit and pressure of exhaust gas manifesting at a point rearward of the collecting unit in the discharge path, and;
an engine load increase time determining unit that determines whether or not the increase in load on the engine by the load control unit has been sustained over a length of time equal to or greater than a predetermined length of time, wherein:
if the exhaust gas pressure difference, detected by the exhaust gas passage resistance detection unit after the regeneration need determining unit determines that the collecting unit needs to be regenerated, is equal to or less than a predetermined pressure difference set as a decision-making criterion for deciding whether or not regeneration of the collecting unit has been completed and the engine load increase time determining unit determines that the increase in load on the engine has been sustained by the load control unit over the length of time equal to or greater than the predetermined length of time, the regeneration completion determining unit determines that regeneration of the collecting unit has been completed.

9. A work machine according to claim 4, further comprising:
an engine load increase time determining unit that determines whether or not the increase in load on the engine by the load control unit has been sustained over a length of time equal to or greater than a predetermined length of time, wherein:
if the exhaust gas pressure difference, detected by the exhaust gas passage resistance detection unit after the regeneration need determining unit determines that the collecting unit needs to be regenerated, is equal to or less than a predetermined pressure difference set as a decision-making criterion for deciding whether or not regeneration of the collecting unit has been completed and the engine load increase time determining unit determines that the increase in the load on the engine has been sustained by the load control unit over a length of time equal to or greater than the predetermined length of time, the regeneration completion determining unit determines that regeneration of the collecting unit has been completed.

10. A work machine according to any one of claims 1 through 9, further comprising:
a pressure detection unit that detects a pressure at the pressure accumulating unit, wherein:
during a period of time elapsing after the regeneration need determining unit determines that the collecting unit needs to be regenerated and ending when the regeneration completion determining unit determines that regeneration of the collecting unit has been completed, (1) if the pressure at the pressure accumulating unit detected by the pressure detection unit is equal to or less than an upper limit value, the load control unit causes the increase in the load on the engine by controlling the pressure accumulating unit so as to accumulate the pressure oil from the hydraulic pump attributable to the output of the engine at the pressure accumulating unit as pressure energy and (2) if the pressure at the pressure accumulating unit detected by the pressure detection unit exceeds the upper limit value, the load control unit causes the increase in the load on the engine by controlling the power storage unit so as to store the electric energy of power generated at the generator attributable to the output of the engine, in the power storage unit.

11. A work machine according to claim 10, further comprising:
a voltage detection unit that detects a voltage at the power storage unit; and
a post-injection unit that executes post-injection of fuel at the engine, wherein:
the load control unit controls the power storage unit so as to (1) cause the increase in the load on the engine by storing the electric energy of power generated at the generator attributable to the output of the engine in the power storage unit if the voltage at the power storage unit detected by the voltage detection unit is equal to or less than an upper limit voltage and (2) stop power storage in the power storage unit if the voltage at the power storage unit detected by the voltage detection unit exceeds the voltage upper limit; and
during a period of time elapsing after the regeneration need determining unit determines that the collecting unit needs to be regenerated and ending when the regeneration completion determining unit determines that regeneration of the collecting unit has been completed, the post-injection unit executes post-injection of fuel at the engine if the load control unit stops power storage in the power storage unit because the voltage at the power storage unit detected by the voltage detection unit exceeds the voltage upper limit.

12. A work machine, comprising:
a hydraulic pump that is driven by an engine and puts out pressure oil;
a generator driven by the engine;
a pressure accumulating unit that accumulates pressure oil from the hydraulic pump as pressure energy, the pressure oil being attributable to output of the engine;
a power storage unit that stores electric energy of power generated at the generator, the electric energy of power being attributable to the output of the engine;
a hydraulic actuator that is driven with pressure energy of oil that is accumulated at the pressure accumulating unit;
an electric motor that is driven with electric energy stored in the power storage unit; and
a drive control unit that controls drive of the hydraulic actuator with the pressure energy of oil that is accumulated at the pressure accumulating unit and also controls drive of the electric motor with electric energy stored in the power storage unit, wherein:
the drive control unit gives priority to drive of the hydraulic actuator over drive of the electric motor.

13. A work machine according to claim 12, further comprising:
a pressure detection unit that detects pressure at the pressure accumulating unit, wherein:
the drive control unit controls drive of the hydraulic actuator and drive of the electric motor so that (1) if the pressure at the pressure accumulating unit detected by the pressure detection unit is equal to or greater than a lower limit value, the drive control unit drives the hydraulic actuator with the pressure energy of oil that is accumulated at the accumulating unit without driving the electric motor and (2) if the pressure at the pressure accumulating unit detected by the pressure detection unit is less than the lower limit value, the drive control unit drives the electric motor with the electric energy stored in the power storage unit without driving the hydraulic actuator.
